# FASCICULE DE BREVET EUROPEEN

(11) **EP 2 300 962 B1**
(45) Date de publication et mention de la délivrance du brevet: **10.04.2019**
(21) Numéro de dépôt: 09794000.1
(22) Date de dépôt: 26.05.2009
(51) Int. Cl.: G06K 9/32, G06K 9/00, G06K 9/68

(54) **PROCEDE ET DISPOSITIF DE LECTURE D'UNE CARACTERISTIQUE PHYSIQUE SUR UN OBJET**
VERFAHREN UND VORRICHTUNG ZUR AUSLESUNG EINER PHYSIKALISCHEN EIGENSCHAFT EINES OBJEKTS
METHOD AND DEVICE FOR READING A PHYSICAL CHARACTERISTIC ON AN OBJECT

(30) Priorité: 12.06.2008 FR 0803281
(43) Date de publication de la demande: 30.03.2011
(73) Titulaire: Advanced Track & Trace, 92504 Rueil-Malmaison Cedex (FR)
(72) Inventeur: SAGAN Zbigniew, F-92504 Rueil-Malmaison Cedex (FR); FOUCOU Alain, F-92504 Rueil-Malmaison Cedex (FR); MASSICOT Jean-Pierre, F-92504 Rueil-Malmaison Cedex (FR)
(74) Mandataire: Cornuejols, Georges
(86) Numéro de dépôt international: PCT/FR2009/000606
(87) Numéro de publication internationale: WO 2010/004101

(56) Documents cités:
- WO-A-91/19614
- WO-A-2007/028799
- WO-A-2008/107525
- DE-A1-102004 042 024
- US-A- 5 673 338
- US-A1- 2007 036 470
- RÉMY MULLOT ED - MULLOT R: "Les Documents Ecrits : de la numerisation a l'indexation par le contenu, Les applications industrielles de traitement des documents écrits", 1 January 2006 (2006-01-01), LES DOCUMENTS ECRITS : DE LA NUMERISATION A L'INDEXATION PAR LE CONTENU, PARIS : LAVOISIER, FR, PAGE(S) 179 - 193, XP002602646, ISBN: 978-2-7462-1143-8

## Description

La présente invention concerne un procédé et un dispositif de lecture d'une caractéristique physique sur un objet.

Elle vise, notamment, à résoudre des problèmes de contrefaçon et de marché gris, et d'une manière générale, un problème d'identification et/ou d'authentification d'un objet quelconque, notamment un produit, un document, par exemple d'identité, un emballage ou un billet de banque. Plus particulièrement, la présente invention vise un système permettant de faciliter l'enregistrement d'une empreinte unitaire d'un objet lors de la phase de fabrication de l'objet, ainsi que de faciliter l'extraction de l'empreinte lors de la phase de vérification de l'identité et de l'authenticité d'un objet.

Les objets fibreux (papiers, carton) mais également la majorité des objets métalliques, plastiques, papier vernis, ou autres, possèdent, à l'échelle microscopique, une structure de nature aléatoire. Tout comme on a développé pour les êtres humains des techniques biométriques qui exploitent les structures uniques que forment l'empreinte de la main ou l'iris, à des fins d'identification ou de vérification d'identité, on peut concevoir des techniques permettant de mesurer les caractéristiques microscopiques uniques que possèdent les objets, afin de les identifier ou de les authentifier.

A l'heure actuelle, il n'existe pas de procédé physique connu permettant de reproduire cette structure aléatoire. De plus, il a été démontré que des déformations macroscopiques telles que le froissement du papier ou son aspersion d'eau, n'altèrent pas de manière significative ces propriétés microscopiques. Ainsi, la majorité des objets possèdent naturellement des caractéristiques qui permettent de les caractériser de manière unique, qui ne sont pas reproductibles, et qui sont affectées de manière négligeable par le temps et l'usure.

En exploitation, on peut identifier un objet en extrayant ses caractéristiques, et en recherchant dans une base de données l'objet qui possède les caractéristiques les plus similaires à l'objet à identifier. Si l'identification n'est pas retrouvée, on considère l'objet comme étant inconnu (ou « illégitime » si les seuls objets légitimes sont les objets répertoriés dans la base de données). On note que la recherche dans la base de donnée peut être coûteuse, et doit être optimisée si un grand nombre d'objets sont enregistrés. Par contre, si les caractéristiques de l'objet mesurées à l'enregistrement lui sont associées, par exemple sous forme d'un code barre imprimé sur l'objet, on peut également vérifier l'authenticité de l'objet sans avoir recours à la base de données.

Dans le document US 6,584,214, il est décrit comment la structure en trois dimensions d'un matériau peut être mesurée et numérisée à des fins d'authentification et d'identification. La demande de brevet WO2006016114 (Ingenia Technology) expose l'utilisation de la technologie appelée LSA, ou « Laser Surface Authentication » (authentification de surface au laser) : un faisceau laser est envoyé sur la surface dont on cherche à extraire une empreinte, et des capteurs captent la lumière du faisceau laser qui est réfléchie dans différentes directions, en fonction de l'orientation de la surface microscopique locale. La valeur de ce signal, qui dépend des propriétés locales du matériau, est donc unique. La probabilité que deux surfaces aient des empreintes similaires est négligeable. Notons que, lors de la phase d'enregistrement, qui est, pour des raisons économiques, préférablement effectuée de manière automatique, les objets défilent à haute vitesse sur un convoyeur en face de la source laser. Comme seule une portion de la surface du produit peut être traitée, nécessairement la même portion de l'objet doit être captée lors d'une phase ultérieure d'identification ou de la vérification d'un produit. On note que la capture d'empreinte est très sensible aux problèmes de positionnement, une erreur de positionnement d'à peine un millimètre pouvant invalider la lecture.

Ces techniques présentent des inconvénients. Leurs mises en oeuvre sont généralement coûteuses, fragiles. En conséquence, ces techniques sont difficiles à exploiter. De plus, elles compliquent significativement la phase d'enregistrement de l'empreinte. Par exemple, s'il s'agit d'emballages, ceux-ci devront être envoyés au centre où ils seront enregistrés, généralement chez le fournisseur de la technologie. La complexité et le coût de cette phase est ainsi un frein important à l'adoption de cette technologie.

Une technologie d'authentification est d'autant plus utile qu'elle peut être utilisée par un grand nombre d'intervenants (inspecteurs douaniers, distributeurs, policiers, points de vente, voire les consommateurs finaux), afin de pouvoir détecter les contrefaçons à tout moment. Cependant, l'exploitation de la technologie est limitée par le coût (et donc la rareté), la taille et le poids des appareils de lecture, ce qui rend difficile sinon impossible la lecture « sur le terrain ».

En général, seule une petite partie de la surface d'un objet est traitée. Si la surface ayant servi à l'extraction d'une empreinte n'est pas spécifiée, seules des personnes instruites sur la position précise de cette zone pourront en extraire la signature. Or, dans le cadre de la protection des marques, il faudrait connaître les positions des zones traitées pour un très grand nombre de produits, ce qui n'est pas possible même pour un inspecteur ou un douanier formé à cet effet.

Par ailleurs, ces techniques ont une très faible tolérance aux erreurs de positionnement : un décalage d'un millimètre ou une rotation d'un degré peuvent suffire pour que les caractéristiques extraites ne correspondent plus aux caractéristiques mesurées à l'enregistrement. La lecture est donc une procédure très délicate qui doit essentiellement être réalisée en laboratoire.

En conséquence, ces technologies restent essentiellement limitées à un usage forensique, ce qui en réduit considérablement leur valeur.

La demande de brevet WO 2007/028799 décrit une méthode d'identification d'objets par l'acquisition d'une image numérique de la microstructure de sa surface. L'invention permet d'exploiter un outil standard d'acquisition d'image afin d'extraire une description unique d'un objet, permettant son identification par l'intermédiaire d'une base de donnée. Cette invention résout donc en partie les problèmes de l'art antérieur décrits précédemment, notamment le coût et la disponibilité des moyens de capture de l'empreinte.

Cependant, les difficultés de positionnement de l'objet ne sont pas résolues dans ce document. Comme seule une petite partie de la surface de l'objet peut être enregistrée, il faut que la position de l'enregistrement soit connue par l'utilisateur de l'objet. Or comme mentionné précédemment, cela n'est pas concevable dans le domaine de la protection des marques et modèles, car il faudrait connaître cette position pour un très grand nombre d'objets. Dans l'hypothèse où la position de l'empreinte sur l'objet serait connue, une grande précision du positionnement serait nécessaire pour extraire une empreinte d'identification à corréler aux empreintes déterminées lors de l'enregistrement des objets. Ce document décrit aussi une technique nécessitant seulement la position d'un point de référence. Cependant, la capture doit toujours être précisément ajustée sur ce point de référence, et le problème de positionnement n'est pas résolu.

On remarque que les problèmes de positionnement peuvent s'appliquer aussi lors de la lecture d'une marque invisible appliquée sur un produit. En effet, si, idéalement, la marque est imprimée sur l'ensemble du produit de façon à être lisible quelle que soit la position de la surface captée, en pratique seule une partie de la surface du produit peut être marquée car les images numériques des marques invisibles seraient, sinon, d'une très grande taille. Par exemple, pour marquer entièrement un produit ayant une surface de 15 x 15 cm et une marque invisible définie à 2400dpi, il faudrait générer une image numérique de plus de 200 millions de pixels. On génère donc une ou plusieurs images qui ne couvrent qu'une fraction de la surface du produit, ce qui pose le problème de la détermination des zones de l'image à capturer.

On connait également la demande de brevet allemand DE 10 2004 042024 qui divulgue un procédé de vérification automatique de l'authenticité de documents dans lesquels une information est cachée.

On connait, de plus, la demande de brevet américain US 2007/036 470 qui divulgue un dispositif pour générer une empreinte digitale d'articles et son utilisation dans divers domaines.

La présente invention vise à remédier à tout ou partie de ces inconvénients.

Selon un premier aspect, la présente invention vise un procédé de lecture d'une caractéristique physique sur un objet, caractérisé en ce qu'il comporte :
- une étape (240, 315, 405) de capture d'une première image d'au moins une partie dudit objet, avec une première résolution,
- une étape (245, 320, 415, 420) de détermination de position d'une zone de l'objet à traiter, en fonction de ladite première image, qui comporte:
   - une étape de détermination d'au moins une position de marque imprimée, dans lequel on émet une requête à destination d'une base de données, ladite requête comportant des positions de points et/ou de lignes caractéristiques de l'objet lesdits points et/ou lignes caractéristiques étant extraits de la première image et on reçoit, en retour, de la base de données, une information de forme de l'objet et de position de chaque marque imprimée dans ladite forme de l'objet,
   - une étape de capture d'une image d'au moins une dite marque et
   - une étape de lecture d'une information représentée par ladite marque et représentative de la position de la zone à traiter,
- une étape (255, 330, 430) de capture d'une deuxième image de ladite zone d'objet à traiter, avec une deuxième résolution supérieure à ladite première résolution et
- une étape (260, 335, 440) de détermination de ladite caractéristique physique en fonction de ladite deuxième image.

Ainsi, la mise en oeuvre de la présente invention permet de réduire, voire éliminer, les problèmes des technologies ayant recours à des moyens de capture coûteux et peu pratiques, en étant compatibles avec des moyens de capture d'image numérique de bas de gamme, par exemple des scanners « flatbed » (à plat), des capteurs d'images d'appareils photo numériques ou de téléphone mobile ou de caméras industrielles. Le prix de ces moyens de capture d'images a baissé à mesure qu'ils étaient produits en plus grande quantité. De plus, la qualité de capture d'image s'est significativement améliorée. La plupart des scanners flatbed peuvent aujourd'hui capter des images à des résolutions optiques de 2.400 dpi (acronyme de « dot per inch » pour échantillons par pouce), ce qui autorise une précision pouvant aller jusqu'à 10 microns. De véritables microscopes électroniques portatifs connectés à un ordinateur d'usage général, sont disponibles à des prix modérés. Les caméras industrielles permettent d'acquérir des images de grande qualité à des résolutions qui peuvent être très élevées, et ceci lorsque de nombreux objets défilent à grande vitesse devant elles. Certaines caméras, appelées caméras « linéaires » du fait que leur capteur est linéaire, permettent d'acquérir une image continue, évitant de recourir à l'activation de la capture par l'intermédiaire de capteurs.

En particulier, la mise en oeuvre de la présente invention permet de stabiliser et d'uniformiser le positionnement de la zone d'intérêt où est lue la caractéristique physique lors de l'enregistrement d'empreintes d'objets. On note que, parmi les caractéristiques physiques lues par la mise en oeuvre de la présente invention, se trouvent les caractéristiques locales de la matière, pour traiter une empreinte unique de l'objet et les marques imprimées ou formées par un processus de marquage de la matière.

Selon des caractéristiques particulières, au cours de l'étape de détermination de position de la zone de l'objet à traiter, on détermine la position d'au moins un point caractéristique de l'objet puis la position de la zone à traiter par rapport à chaque dit point caractéristique de l'objet. Chaque point caractéristique peut se trouver sur le contour de l'objet, par exemple en en étant un coin.

Selon des caractéristiques particulières, au cours de l'étape de détermination de position de la zone de l'objet à traiter, on détermine la position d'au moins une ligne caractéristique de l'objet puis la position de la zone à traiter par rapport à chaque dite ligne caractéristique de l'objet. Chaque ligne caractéristique peut se trouver sur le contour de l'objet, par exemple en en étant un bord, ou dans la surface de l'objet dans l'image, par exemple en représentant une arête.

Selon des caractéristiques particulières, le procédé objet de la présente invention, tel que succinctement exposé ci-dessus comporte une étape de détection d'arrivée dudit objet. Par exemple, un capteur placé en regard d'un chemin des objets sur un convoyeur déclenche la capture et/ou le traitement d'image d'un objet.

Selon des caractéristiques particulières, le procédé objet de la présente invention, tel que succinctement exposé ci-dessus, comporte une étape de marquage de l'objet avec une marque portant de l'information représentative d'au moins une partie de ladite caractéristique physique. Par exemple, la marque est un code à barres en deux dimensions ou une marque anti-copie représentative de cette information.

Selon des caractéristiques particulières, au cours de l'étape de détermination d'une caractéristique physique, ladite caractéristique physique est liée à une structure locale de la surface de l'objet dans la zone de l'objet à traiter.

Selon un exemple non faisant partie de l'invention, au cours de l'étape de détermination de position de la zone de l'objet à traiter, on émet une requête à destination d'une base de données, ladite requête comportant des positions de points et/ou de lignes caractéristiques de l'objet et on reçoit, en retour, de la base de données, une information de forme de l'objet et de position de la zone à traiter dans ladite forme de l'objet. On peut ainsi traiter des objets de formes différentes, non triés, en les reconnaissant par appel d'une base de données des formes des objets et des positions de zones à traiter.

On peut ainsi traiter des objets dont les zones à traiter sont en des positions différentes mais identifiées dans au moins une marque imprimée sur l'objet.

On peut ainsi traiter des objets de formes différentes, non triés, en obtenant la position de chaque marque par appel d'une base de données des formes des objets et des positions de marques à lire.

Selon des caractéristiques particulières, le procédé objet de la présente invention, tel que succinctement exposé ci-dessus comporte une étape de transmission de la caractéristique physique à une base de données. Les caractéristiques physiques des différents objets peuvent ainsi être conservées dans une ou plusieurs bases de données, par exemple une base de données par type d'objet ou par propriétaire de droits de propriété intellectuelle concernant lesdits objets.

Selon des caractéristiques particulières, le procédé objet de la présente invention, tel que succinctement exposé ci-dessus, comporte une étape de comparaison de ladite caractéristique physique avec des caractéristiques physiques conservées dans ladite base de données et de détermination de la caractéristique physique précédemment conservée la plus similaire à la caractéristique physique nouvelle transmise à la base de données. La présente invention s'applique ainsi non seulement à l'enregistrement de caractéristiques physiques d'objets en cours de fabrication mais aussi à l'identification d'objets en circulation. La présente invention permet donc de lutter contre le marché gris, qui consiste à mettre en vente sur un marché non autorisé, un objet légalement vendu sur un autre marché.

Selon des caractéristiques particulières, au cours de l'étape de détermination de position de la zone d'objet à traiter, on détermine une position se trouvant sur l'intérieur de l'objet une fois fabriqué. En effet, l'inventeur a déterminé que l'extérieur d'un étui d'emballage est fréquemment verni et qu'en revanche, l'intérieur n'est généralement pas verni. Or l'absence de verni facilite la détermination d'une caractéristique physique représentative de la structure locale de la surface du carton, le verni uniformisant l'état de surface. En général, une résolution de l'ordre de 8 000 à 12 000 dpi est nécessaire pour extraire une caractéristique physique discriminante d'une surface vernie, or cette résolution est difficilement atteignable lors d'un enregistrement à haute vitesse ou lors de la capture par un scanner à plat. On observe que, au cours de la fabrication d'un étui, celui-ci n'est mis en forme en volume que tardivement, après impression, découpe et collage.

Selon des caractéristiques particulières, au cours de l'étape de capture d'une première image de l'objet, on met en oeuvre la vitesse de passage de l'objet et, au cours de l'étape de détermination de position de la zone à traiter, on détermine un instant de capture de la deuxième image. On peut ainsi compenser, dans le cas d'une capture d'image avec un capteur linéaire, la déformation de l'image provenant de la vitesse de l'objet et commander la capture de la deuxième image pour qu'elle corresponde au passage de la zone à traiter en regard d'un capteur d'image.

Selon des caractéristiques particulières, au cours de l'étape de détermination d'une caractéristique physique, on effectue une rotation préalable de la deuxième image. On compense ainsi la position angulaire relative des objets traités successivement.

Selon des caractéristiques particulières, au cours de l'étape de détermination d'une caractéristique physique, on effectue une transformée en fréquence (Fourier, DCT). On peut réduire ainsi le nombre de coefficients à traiter (en éliminant les coefficients haute fréquence qui ne sont pas significatifs) pour identifier un objet et à conserver en mémoire.

Selon des caractéristiques particulières, au cours de l'étape de détermination de la caractéristique physique, on applique une fonction de hashage à la caractéristique physique et on associe à la caractéristique physique le résultat, ou « condensât » (en anglais « hash ») de cette fonction de hashage. L'utilisation de ce condensât permet de retrouver très rapidement une caractéristique physique.

Selon des caractéristiques particulières, au cours de l'étape de détermination d'une caractéristique physique, on détermine une caractéristique physique de l'objet. Par exemple, la caractéristique physique est formée par des irrégularités de la matière ou de la surface de l'objet ou d'une marque imprimée est un Cryptoglyph (marque déposée) ou une marque destinée à la détection d'une copie, par exemple un Seal Vector (marque déposée).

Selon un deuxième aspect, la présente invention vise un dispositif de lecture d'une caractéristique physique sur un objet, caractérisé en ce qu'il comporte :
- un moyen de capture d'une première image d'au moins une partie dudit objet, avec une première résolution,
- un moyen de détermination de position d'une zone de l'objet à traiter, en fonction de ladite première image qui comporte:
   - un moyen de détermination d'au moins une position de marque imprimée, qui comporte un moyen d'émission d'une requête à destination d'une base de données, ladite requête comportant des positions de points et/ou de lignes caractéristiques de l'objet lesdits points et/ou lignes caractéristiques étant extraits de la première image et un moyen de réception, en retour, de la base de données, d'une information de forme de l'objet et de position de chaque marque imprimée dans ladite forme de l'objet,
   - un moyen de capture d'une image d'au moins une dite marque et
   - un moyen de lecture d'une information représentée par ladite marque et représentative de la position de la zone à traiter,
- un moyen de capture d'une deuxième image de ladite zone d'objet à traiter, avec une deuxième résolution supérieure à ladite première résolution et
- un moyen de détermination de ladite caractéristique physique en fonction de ladite deuxième image.

Les avantages, buts et caractéristiques particulières de ce dispositif étant similaires à ceux du procédé objet de la présente invention, tel que succinctement exposé ci-dessus, ils ne sont pas rappelés ici.

D'autres avantages, buts et caractéristiques de la présente invention ressortiront de la description qui va suivre faite, dans un but explicatif et nullement limitatif, en regard des dessins annexés, dans lesquels :
- la figure 1 représente, schématiquement, un premier mode de réalisation particulier du dispositif objet de la présente invention,
- la figure 2 représente, sous forme d'un logigramme, des étapes d'un premier mode de réalisation particulier du procédé objet de la présente invention,
- la figure 3 représente, sous forme d'un logigramme, des étapes d'un deuxième mode de réalisation particulier du procédé objet de la présente invention,
- la figure 4 représente, sous forme d'un logigramme, des étapes d'un troisième mode de réalisation particulier du procédé objet de la présente invention,
- la figure 5 représente, sous forme d'un logigramme, des étapes d'un quatrième mode de réalisation particulier du procédé objet de la présente invention et
- la figure 6 illustre un objet portant des moyens pour la mise en oeuvre du procédé objet de la présente invention.

Dans toute la description qui suit, on se limite au cas où la caractéristique physique est une empreinte, c'est-à-dire qu'elle est unique et permet d'identifier l'objet. Cependant, la présente invention ne se limite pas à ce type de caractéristique physique mais s'étend, bien au contraire aux structures de la matière, marques imprimées et marquages de la matière qui ne seraient pas uniques.

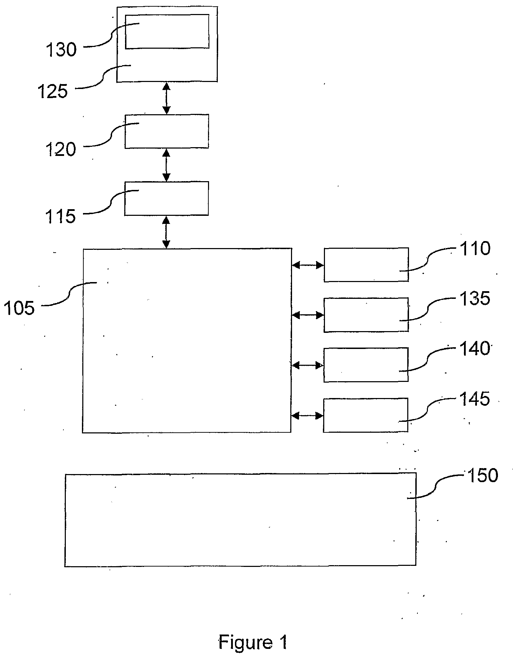

On observe, en figure 1, un terminal local 105 muni d'une imprimante 110, d'un moyen de capture d'image 135, deux capteurs 140 et 145 et d'un moyen d'accès 115 à un réseau 120 auquel est relié un serveur 125. Le serveur 125 est muni d'une base de données 130.

Le terminal local 105 est, par exemple, de type ordinateur à usage général. Il est installé sur une chaîne 150 de fabrication ou de transformation d'objets, par exemple d'emballages. La chaîne 150 comporte, par exemple, un dépileur d'objets plans (non représenté) et un convoyeur (non représenté) mettant en mouvement les objets à traiter, l'un derrière l'autre.

Le capteur 140 est positionné sur la chaîne de fabrication 150, en amont du champ optique du capteur d'image 135 et est adapté à détecter l'arrivée d'un objet à traiter. Par exemple, le capteur 140 est une cellule optique comportant un émetteur et un récepteur de rayons lumineux. Le capteur 145 est placé sur la chaîne 150 et détermine la vitesse des objets sur cette chaîne. Par exemple, le capteur 145 est relié à un automate (non représenté) régissant le fonctionnement de la chaîne 150 ou est relié à un support de déplacement des objets, par exemple une bande de convoyeur. Le terminal local 105 commande l'impression des objets par l'imprimante 110, de manière connue en soi, par exemple par jet d'encre ou par marquage laser. Le moyen d'accès 115 au réseau 120 est, par exemple, un modem de type connu, pour accès au réseau 120, par exemple le réseau Internet.

Le moyen de capture d'image 135 est, par exemple, un appareil photo numérique, un capteur linéaire ou une caméra industrielle.

Le serveur 125 est de type connu. La base de données 130 conserve, au moins, une liste d'identifiants d'objets et d'empreintes liées à ces objets, déterminées conformément au procédé objet de la présente invention. Préférentiellement, cette base de données 130 conserve, en relation avec chaque identifiant d'un objet, un identifiant de type d'objet et de position de zone de détermination d'empreinte pour ce type d'objet, une identifiant du prestataire effectuant la fabrication ou la transformation.

Le terminal 105 conserve un logiciel qui, lors de son exécution, implémente des étapes d'un procédé de lecture d'une empreinte objet de la présente invention. Le serveur 125 conserve un logiciel qui, lors de son exécution, implémente des étapes d'un procédé de stockage et de reconnaissance d'empreinte.

En variante, le terminal 105 ne conserve pas de logiciel spécifique mais met en oeuvre un navigateur de la toile et un service de la toile (en anglais, « web service ») hébergé par le serveur 125.

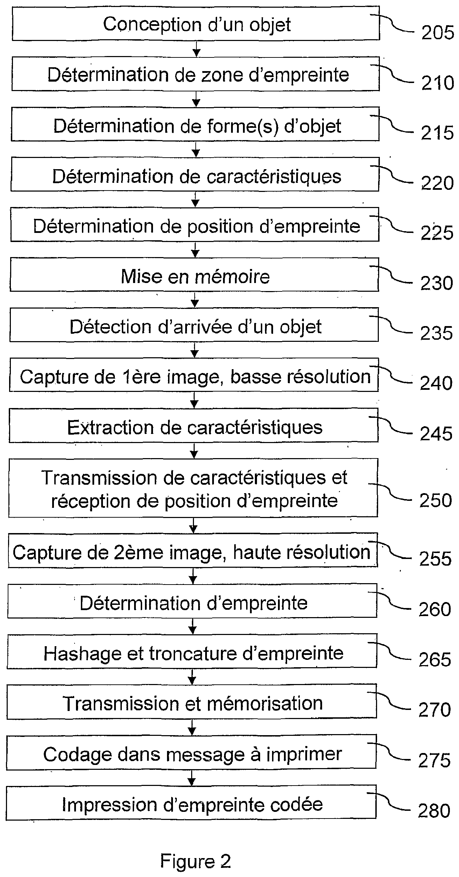

On va maintenant décrire le fonctionnement du premier mode de réalisation du procédé de lecture d'empreintes d'objets objet de la présente invention, en regard des étapes illustrées en figure 2.

Au cours d'une étape 205, on conçoit un type d'objet, par exemple un nouvel emballage.

Au cours d'une étape 210, on détermine chaque position, sur l'objet, d'une zone où sera lue une empreinte ou une information représentative de la position d'une telle zone.

Au cours d'une étape 215, on détermine la forme ou les formes que l'objet est susceptible de prendre dans une image prise par le capteur d'image 135 (par exemple un emballage peut être vu, avant pliage, côté recto ou côté verso).

Au cours d'une étape 220, on détermine des points ou lignes caractéristiques de l'objet dans les formes susceptibles d'être prises.

Au cours d'une étape 225, on détermine la position, dans chaque forme vue, de chaque dite zone.

Au cours d'une étape 230, on met en mémoire, par exemple dans la base de données 130, le résultat des étapes 215 à 225, pour chaque type d'objet.

Au cours d'une étape 235, on détecte l'arrivée de l'objet à proximité ou dans le champ de vision du capteur d'image. On mesure alors la vitesse de l'objet et, en fonction de cette vitesse et de la distance entre le lieu de détection d'arrivée de l'objet et la fin du champ de vision du capteur, on détermine quelle durée attendre avant une capture de l'image de l'objet. On attend, ensuite, pendant cette durée.

Au cours d'une étape 240, on capture une première image de l'objet, avec une première résolution.

Au cours d'une étape 245, on effectue un traitement d'image de l'objet pour en extraire le contour ou les lignes ou points caractéristiques, par exemple les bords droits ou les angles formés sur le contour.

Au cours d'une étape 250, on transmet le résultat du traitement d'image au serveur et, en retour, le serveur détermine, en fonction de ce résultat, et transmet une position d'une zone d'empreinte et une position d'une zone de message à imprimer, dans la forme visible de l'objet. Par exemple, le message à imprimer prend la forme d'un code à barres à deux dimensions.

Au cours d'une étape 255, on capture une image de la zone d'empreinte, à une deuxième résolution, supérieure à la première résolution. Au cours d'une étape 260, on détermine une empreinte de l'objet, selon des techniques connues, soit à partir de la structure locale du matériau dans la zone d'empreinte, soit à partir de la détérioration, au cours de son impression, d'une marque anti-copie. Par exemple, on applique une Transformée de Fourier ou cosinus discrète appliquée à la structure détectée ou à la matrice d'erreurs d'impression de la marque anti-copie. Eventuellement, on effectue une quantification des valeurs pour comprimer la représentation binaire. On effectue, préférentiellement, un hashage de l'empreinte ainsi déterminée et, éventuellement, on effectue une troncature du condensât résultant du hashage, au cours d'une étape 265.

Au cours d'une étape 270, on transmet au serveur l'empreinte et le condensât et le serveur insère ces valeurs, dans la base de données, en regard d'autres éléments d'identification de l'objet (date et lieu de fabrication, marché de destination, type d'objet, numéro de série ...).

Au cours d'une étape 275, on code cette empreinte ou son condensât et la position de la zone d'empreinte, pour réaliser un message à imprimer. Par exemple, on effectue un codage connu sous le nom de « Datamatrix » (marque déposée).

Au cours d'une étape 280, on imprime, dans la zone de message à imprimer, les données codées.

Ainsi, avant l'enregistrement, dans un mode de réalisation particulier :
- on détermine ou on reçoit la forme générale de l'objet ;
- on détermine ou on reçoit la nature macroscopique de la surface, par exemple vernie ou non ou côté recto ou verso,
- optionnellement, on détermine ou on reçoit un ou plusieurs points de référence de l'objet ;
- optionnellement, on détermine ou reçoit des propriétés d'unicité de la surface pour les différentes parties de l'objet et
- à partir de la forme générale de l'objet et du contenu macroscopique de la surface, optionnellement des points de référence et des propriétés d'unicité de la surface, on détermine la position de capture d'empreinte sur l'objet.

Lors de l'enregistrement, pour chaque objet :
- on détecte le passage d'une extrémité de l'objet, ou d'un ou plusieurs points de l'objet,
- on détermine la position de la zone d'empreinte, ou on calcule le moment de saisie d'image,
- on mémorise l'image,
- optionnellement, on calcule l'empreinte et
- optionnellement, on marque au moins un sous-ensemble de l'empreinte sur l'objet.

Dans des modes de réalisation, la structure aléatoire de la surface de l'objet est exploitée pour générer une empreinte unitaire, par l'intermédiaire d'un moyen standard de capture d'image.

Avant de décrire une application de la présente invention à l'identification d'emballages, on rappelle que, généralement, les étuis d'emballages sont imprimés sur des feuilles de cartons ou de matière plastique imprimée en flexographie. L'étape d'imposition en prépresse permet de disposer le design de l'emballage autant de fois que possible sur la plaque qui sera réalisée, de façon à minimiser le gaspillage de carton inutilisé. Une fois les cartons imprimés, ils sont placés dans une machine qui les découpera en étui. Généralement, les étuis doivent ensuite être acheminés au lieu d'assemblage du produit, qui peut se situer dans une usine d'assemblage.

Dans cette application particulière à l'identification des emballages, il est préférable que l'empreinte soit réalisée lorsque l'étui est découpé, par exemple sur le lieu d'assemblage. Ainsi, on s'assure que seuls les produits légitimes seront homologués. L'empreinte peut être calculée sur l'étui découpé ou sur l'étui fermé après passage sur la plieuse-colleuse.

Le papier ou le carton ont une grande richesse de défauts de surface, qui peut être saisie à partir d'une capture d'image relativement basse, par exemple de 2.400 dpi. En revanche, lorsqu'on applique un vernis sur un carton, la couche de vernis masque les défauts de surface du papier. Les surfaces vernies ont, elles-mêmes, des défauts de surface de nature aléatoire. Cependant la taille de ces défauts est plus petite, et une image à haute résolution (par exemple à 10.000 dpi) est nécessaire pour les saisir. Le recto d'un étui d'emballage est fréquemment verni, par contre généralement le verso de l'étui déplié (et la surface interne une fois l'étui plié) n'est généralement pas verni. Il est donc préférable de saisir une image du dos (correspondant à la partie intérieure de l'emballage fermé) de l'étui pour en extraire l'empreinte. En revanche, une marque imprimée représentative de la position de l'empreinte peut être portée par le recto ou par le verso de l'étui.

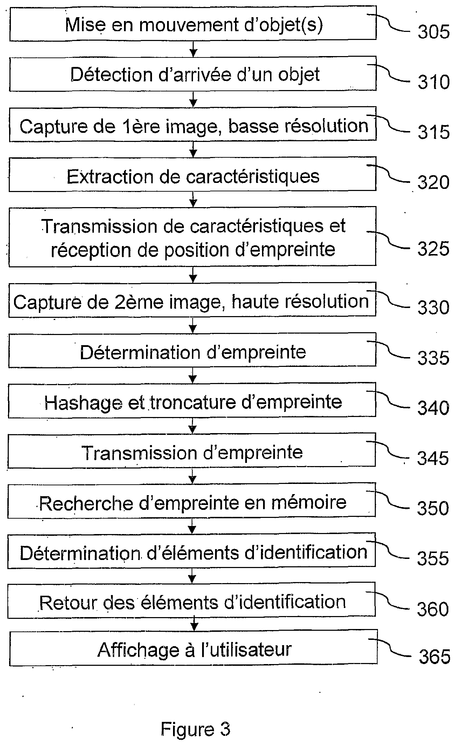

On va maintenant décrire le fonctionnement d'un deuxième mode de réalisation du procédé de lecture d'empreintes d'objets objet de la présente invention, en regard des étapes illustrées en figure 3.

Au cours d'une étape 305, on met en mouvement ledit objet, par exemple sur un convoyeur doté d'un capteur d'image numérique, de capteurs de position optiques et d'un ordinateur de contrôle, de traitement et de communication avec le serveur.

Au cours d'une étape 310, on détecte l'arrivée de l'objet à proximité ou dans le champ de vision du capteur d'image. On mesure alors la vitesse de l'objet et, en fonction de cette vitesse et de la distance entre le lieu de détection d'arrivée de l'objet et la fin du champ de vision du capteur, on détermine quelle durée attendre avant une capture de l'image de l'objet. On attend, ensuite, pendant cette durée.

Au cours d'une étape 315, on capture une première image de l'objet, avec une première résolution.

Au cours d'une étape 320, on effectue un traitement d'image de l'objet pour en extraire le contour ou les lignes ou points caractéristiques, par exemple les bords droits ou les angles formés sur le contour.

Au cours d'une étape 325, on transmet le résultat du traitement d'image au serveur et, en retour, le serveur détermine, en fonction de ce résultat, et transmet une position d'une zone d'empreinte et une position d'une zone de message à imprimer, dans la forme visible de l'objet. Par exemple, le message à imprimer prend la forme d'un code à barres à deux dimensions.

Au cours d'une étape 330, on capture une image de la zone d'empreinte, à une deuxième résolution, supérieure à la première résolution. Au cours d'une étape 335, on détermine une empreinte de l'objet, selon des techniques connues, soit à partir de la structure locale du matériau dans la zone d'empreinte, soit à partir de la détérioration, au cours de son impression, d'une marque anti-copie. Par exemple, on applique une Transformée de Fourier discrète appliquée à la structure détectée ou à la matrice d'erreurs d'impression de la marque anti-copie. On effectue, préférentiellement, un hashage de l'empreinte ainsi déterminée et, éventuellement, on effectue une troncature du condensât résultant du hashage, au cours d'une étape 340.

Au cours d'une étape 345, on transmet au serveur l'empreinte et le condensât. Au cours d'une étape 350, le serveur recherche l'empreinte mémorisée et/ou le condensât mémorisé le (ou les) plus proche(s) de l'empreinte et/ou du condensât transmis, selon des techniques connues de recherche dans une base de données.

Au cours d'une étape 355, on détermine des éléments d'identification de l'objet (date et lieu de fabrication, marché de destination, type d'objet, numéro de série ...) associés au résultat de l'étape de recherche 350.

Au cours d'une étape 360, on retourne ces éléments d'identification à l'ordinateur mis en oeuvre pour contrôler les prises de vues et, au cours d'une étape 365, on affiche ces éléments à son utilisateur, par exemple sur l'écran de l'ordinateur.

Pour déterminer l'empreinte à partir de l'image captée, des techniques connues de l'art antérieur peuvent être utilisées, par exemple l'application d'un filtrage passe-bas pour l'élimination du bruit et des détails de moindre importance. On peut transformer l'image en fréquence, par exemple une transformation de type transformée cosinus discrète (« Discrète Cosine Transform »), ou transformation de Fourier rapide (« Fast Fourier Transform »). On peut alors réduire fortement le nombre de coefficients permettant de représenter l'empreinte.

On peut adapter les méthodes développées en biométrie pour le stockage d'un hashage (« hash ») sécurisé. Par exemple, on utilise des quantificateurs à deux niveaux pour stocker une empreinte biométrique sous forme d'un hash, ce qui permet de la retrouver très rapidement.

On note que, dans certains modes de réalisation, on met en oeuvre un ordinateur d'usage général associé à un scanner à plat (« flatbed »). Les scanners à plat sont des outils de capture d'images pratiques pour capturer des empreintes, car ils permettent de capturer une grande surface à une résolution relativement élevée. Par contre, si on permet à l'utilisateur de placer l'objet à vérifier dans une position arbitraire sur le scanner, il n'est généralement pas concevable de capturer toute la surface (typiquement de taille A4), car cela prend beaucoup de temps (plusieurs minutes) et consomme énormément de mémoire. De plus, il est préférable, en général, d'éviter les interfaces des scanners, car celles-ci contiennent une foule de paramètres ajustables par l'utilisateur qui peuvent affecter la qualité d'image prise : les risques d'un mauvais paramétrage sont grands, même pour un utilisateur expérimenté.

Pour résoudre ces problèmes, dans des modes de réalisation, on met en oeuvre le scanner et on détermine automatiquement la zone d'empreinte à capturer à plus haute résolution à partir d'une image de plus basse résolution permettant la détermination du positionnement de l'empreinte. Pour le contrôle de scanner, l'interface générique « Twain » (marque déposée) permet de contrôler l'ensemble du paramétrage du scanner.

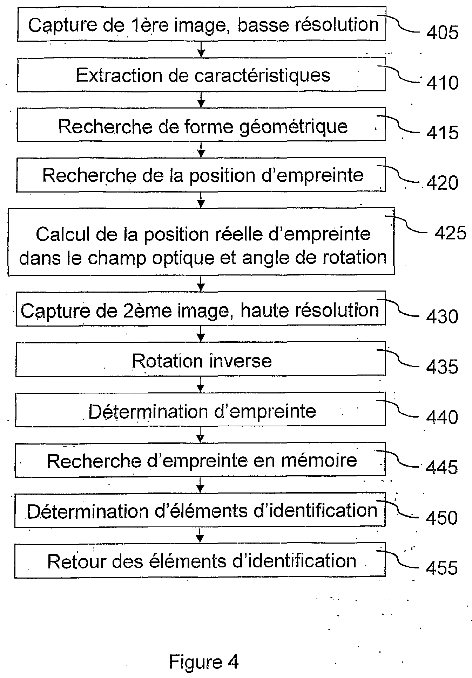

Dans le troisième mode de réalisation, illustré en figure 4, on exploite la forme géométrique de l'objet pour repérer la position de l'empreinte :
- au cours d'une étape 405, on capture, à basse résolution, au moins une grande partie de la surface du verso de l'emballage,
- au cours d'une étape 410, on détermine des limites de l'objet, optionnellement de point de référence de l'objet,
- au cours d'une étape 415, en fonction des limites de l'objet, optionnellement de points de références, on recherche, dans une base de données, la forme géométrique de l'objet,
- au cours d'une étape 420, en fonction de la forme géométrique de l'objet, on détermine la position de la zone d'empreinte associée en mémoire,
- au cours d'une étape 425, on calcule la position réelle, dans le champ de capture d'image du scanner, de la zone d'empreinte et l'angle de rotation de l'image,
- au cours d'une étape 430, on capture la zone d'empreinte ainsi déterminée à haute résolution,
- au cours d'une étape 435, optionnellement, on effectue une rotation inverse de la rotation déterminée au cours de l'étape 425,
- au cours d'une étape 440, on détermine l'empreinte dans la zone captée à haute résolution,
- au cours d'une étape 445, on recherche l'empreinte correspondante dans la base de données d'empreintes,
- au cours d'une étape 450, on détermine des éléments d'identification de l'objet (date et lieu de fabrication, marché de destination, type d'objet, numéro de série ...) associés au résultat de l'étape de recherche 445 et
- au cours d'une étape 455, on retourne ces éléments d'identification à l'ordinateur mis en oeuvre pour contrôler les prises de vues.

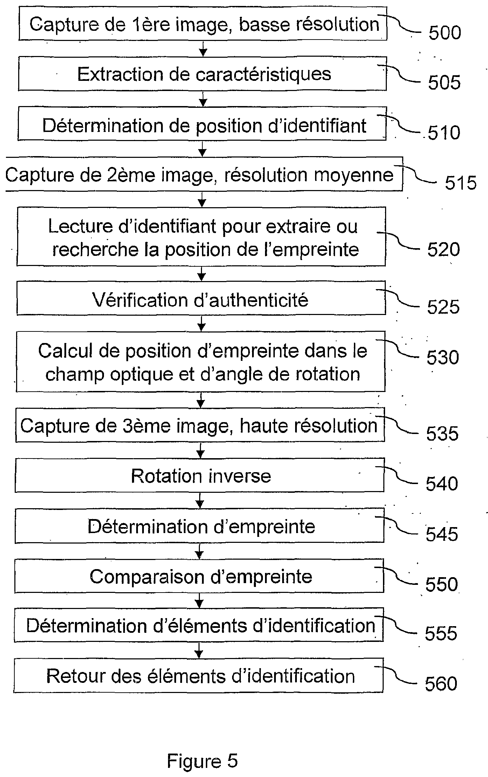

Dans le quatrième mode de réalisation, illustré en figure 5, on exploite un message stocké dans un code identifiant (et/ou authentifiant) pour repérer la position de l'empreinte :
L'exploitation d'un code à barres, 2D ou en particulier 1D, comme identifiant est avantageuse, car les codes à barres 1D sont très facilement détectés et leur orientation précisément mesurée, grâce à la très forte polarisation du gradient de l'image due à l'alternance mono ou bidirectionnelle de zones noires et blanches.
- au cours d'une étape 500, on capture, à une première résolution, dite « basse » résolution, une image d'au moins une grande partie de la surface de l'emballage,
- au cours d'une étape 505, on détermine des limites de l'objet ou au moins un point de référence,
- selon les variantes, cette image comporte l'identifiant qui est alors lu ou, au cours d'une étape 510, on détermine la position d'un identifiant de l'objet (par exemple, un code-barre en une ou deux dimensions) et au cours d'une étape 515, on capture, à une deuxième résolution, dite « moyenne », supérieure à la première résolution, une image dudit identifiant,
- au cours d'une étape 520, on lit ledit identifiant pour en extraire la position de l'empreinte dans le document, soit localement par décodage/décryptage de l'identifiant, soit à distance, en interrogeant une base de données associant des identifiants et des positions d'empreintes,
- optionnellement, si le code identifiant est aussi authentifiant, au cours d'une étape 525, on vérifie si le code est authentique et (éventuellement on en capte alors une image à haute résolution), si oui, on passe à l'étape 530,
- au cours d'une étape 530, on calcule la position de la zone d'empreinte dans le champ de prise de vues et l'angle de rotation de l'empreinte, en fonction :
   ∘ de la position, du facteur d'échelle et de l'angle de rotation de l'empreinte dans le document, conservés en mémoire ou déterminés en fonction de l'identifiant et
   ∘ de la position d'au moins un point de référence du document dans ce champ de prise de vues,
- au cours d'une étape 535, on capture, à une troisième résolution dite « haute », supérieure ou égale à la première résolution et, préférentiellement, supérieure ou égale à la deuxième résolution, une image de la partie de l'emballage correspondant à la position déterminée au cours de l'étape 520, préférentiellement au verso du document (correspondant à l'intérieur de l'emballage),
- optionnellement, au cours d'une étape 540, on effectue la rotation inverse de l'image de l'empreinte,
- au cours d'une étape 545, on détermine l'empreinte du document dans l'image captée, éventuellement après rotation inverse,
- au cours d'une étape 550, on recherche l'empreinte ainsi déterminée dans la base de données des empreintes ou on compare cette empreinte à un contenu d'empreinte conservé, chiffré, dans le code identifiant,
- au cours d'une étape 555, on détermine des éléments d'identification de l'objet (date et lieu de fabrication, marché de destination, type d'objet, numéro de série ...) associés au résultat de l'étape de recherche 550 et
- au cours d'une étape 560, on retourne ces éléments d'identification à l'ordinateur mis en oeuvre pour contrôler les prises de vues.

En variante, on combine les deux modes de réalisation exposés en regard des figures 4 et 5.

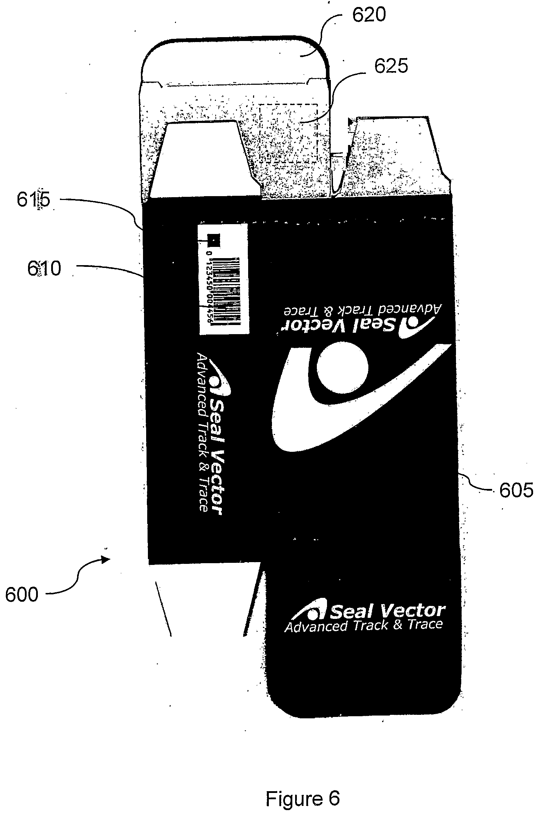

On observe, en figure 6, un objet 600, ici un emballage collé et aplati comportant une partie externe imprimée et vernie 605 et une partie interne non vernie 620. La partie externe 605 est appelée ainsi parce que, lorsque l'emballage renferme le produit qu'il est destiné protéger et/ou identifier, elle se trouve à l'extérieur. Inversement, la partie interne 620 se trouve, dans cette même configuration, à l'intérieur de l'emballage.

La partie externe 605 porte un code à barres 610 et une marque destinée à permettre la détection d'une copie 615, c'est-à-dire que son apparence est fortement modifiée lorsqu'une copie de l'emballage est réalisée. Le code à barres 610 représente une information qui identifie la position de la marque 615 et la position d'une zone d'intérêt 625 où se trouve les éléments de détermination d'une caractéristique physique de l'objet, par exemple une empreinte.

Comme on le comprend, conformément à la présente invention, à partir d'une image de l'objet 600, à basse résolution, on détermine la position de la zone d'intérêt comportant la marque 615 et de la zone d'intérêt 625 où peut être déterminée une empreinte, éventuellement après lecture du contenu d'information du code à barres 610. Une fois ces positions de zones d'intérêt connues, on capture une image à plus haute résolution de chacune d'elles et on détermine, par traitement de cette image, une caractéristique physique, par exemple le contenu de la marque 615 et l'empreinte portée par la zone d'intérêt 625.

Les techniques décrites ci-dessus peuvent servir à faciliter la lecture d'un code numérique invisible tel qu'un Cryptoglyph ou un Seal Vector, une matrice d'information sécurisée contre la copie, et l'empreinte particulière causée par l'impression de ces codes.

## Revendications

1. Procédé de lecture d'une caractéristique physique sur un objet, **caractérisé en ce qu'**il comporte :
- une étape (240, 315, 405) de capture d'une première image d'au moins une partie dudit objet, avec une première résolution,
- une étape (245, 320, 415, 420) de détermination de position d'une zone de l'objet à traiter, en fonction de ladite première image, qui comporte :
- une étape de détermination d'au moins une position de marque imprimée, dans lequel on émet une requête à destination d'une base de données, ladite requête comportant des positions de points et/ou de lignes caractéristiques de l'objet lesdits points et/ou lignes caractéristiques étant extraits de la première image et on reçoit, en retour, de la base de données, une information de forme de l'objet et de position de chaque marque imprimée dans ladite forme de l'objet,
- une étape de capture d'une image d'au moins une dite marque et
- une étape de lecture d'une information représentée par ladite marque et représentative de la position de la zone à traiter,
- une étape (255, 330, 430) de capture d'une deuxième image de ladite zone d'objet à traiter, avec une deuxième résolution supérieure à ladite première résolution et
- une étape (260, 335, 440) de détermination de ladite caractéristique physique en fonction de ladite deuxième image.

2. Procédé selon la revendication 1, **caractérisé en ce que**, au cours de l'étape (245, 320, 415, 420) de détermination de position de la zone de l'objet à traiter, on détermine la position d'au moins un point caractéristique de l'objet puis la position de la zone à traiter par rapport à chaque dit point caractéristique de l'objet.

3. Procédé selon l'une quelconque des revendications 1 ou 2, **caractérisé en ce que**, au cours de l'étape (245, 320, 415, 420) de détermination de position de la zone de l'objet à traiter, on détermine la position d'au moins une ligne caractéristique de l'objet puis la position de la zone à traiter par rapport à chaque dite ligne caractéristique de l'objet.

4. Procédé selon l'une quelconque des revendications 1 à 3, **caractérisé en ce qu'**il comporte une étape (310) de détection d'arrivée dudit objet.

5. Procédé selon l'une quelconque des revendications 1 à 4, **caractérisé en ce qu'**il comporte (280) une étape de marquage de l'objet avec une marque portant de l'information représentative d'au moins une partie de ladite caractéristique physique.

6. Procédé selon l'une quelconque des revendications 1 à 5, **caractérisé en ce que**, au cours de l'étape (260, 335, 440) de détermination d'une caractéristique physique, ladite caractéristique physique est liée à une structure locale de la surface de l'objet dans la zone de l'objet à traiter.

7. Procédé selon la revendication 1, **caractérisé en ce qu'**il comporte une étape (250, 325, 445) de transmission de la caractéristique physique à une base de données.

8. Procédé selon la revendication 7, **caractérisé en ce qu'**il comporte une étape (355, 450) de comparaison de ladite caractéristique physique avec des caractéristiques physiques conservées dans ladite base de données et de détermination de la caractéristique physique précédemment conservée la plus similaire à la caractéristique physique nouvelle transmise à la base de données.

9. Procédé selon l'une quelconque des revendications 1 à 8, **caractérisé en ce que**, au cours de l'étape (245, 320, 415, 420) de détermination de position de la zone d'objet à traiter, on détermine une position se trouvant sur l'intérieur de l'objet une fois fabriqué.

10. Procédé selon l'une quelconque des revendications 1 à 9, **caractérisé en ce que**, au cours de l'étape (315) de capture d'une première image de l'objet, on met en oeuvre la vitesse de passage de l'objet et, au cours de l'étape de détermination de position de la zone à traiter, on détermine un instant de capture de la deuxième image.

11. Procédé selon l'une quelconque des revendications 1 à 10, **caractérisé en ce que**, au cours de l'étape (440) de détermination d'une caractéristique physique, on effectue une rotation (435) préalable de la deuxième image.

12. Procédé selon l'une quelconque des revendications 1 à 11, **caractérisé en ce que**, au cours de l'étape (260, 335) de détermination de la caractéristique physique, on applique une fonction de hashage (365, 340) à la caractéristique physique et on associe, à la caractéristique physique, le condensât résultant de cette fonction de hashage.

13. Procédé selon l'une quelconque des revendications 1 à 12, **caractérisé en ce que**, au cours de l'étape (260, 335, 440) de détermination d'une caractéristique physique, on détermine une caractéristique physique de l'objet.

14. - Dispositif de lecture d'une caractéristique physique sur un objet, **caractérisé en ce qu'**il comporte :
- un moyen de capture d'une première image d'au moins une partie dudit objet, avec une première résolution,
- un moyen de détermination de position d'une zone de l'objet à traiter, en fonction de ladite première image, qui comporte :
- un moyen de détermination d'au moins une position de marque imprimée, qui comporte un moyen d'émission d'une requête à destination d'une base de données, ladite requête comportant des positions de points et/ou de lignes caractéristiques de l'objet lesdits points et/ou lignes caractéristiques étant extraits de la première image et un moyen de réception, en retour, de la base de données, d'une information de forme de l'objet et de position de chaque marque imprimée dans ladite forme de l'objet,
- un moyen de capture d'une image d'au moins une dite marque et
- un moyen de lecture d'une information représentée par ladite marque et représentative de la position de la zone à traiter,
- un moyen de capture d'une deuxième image de ladite zone d'objet à traiter, avec une deuxième résolution supérieure à ladite première résolution et
- un moyen de détermination de ladite caractéristique physique en fonction de ladite deuxième image.

## Patentansprüche

1. Leseverfahren eines physikalischen Merkmals auf einem Objekt, **dadurch gekennzeichnet, dass** es umfasst:
- einen Schritt (240, 315, 405) zur Erfassung eines ersten Bildes wenigstens eines Teils des genannten Objekts mit einer ersten Auflösung,
- einen Schritt (245, 320, 415, 420) zur Positionsbestimmung eines Bereichs des in Abhängigkeit vom dem genannten ersten Bild zu verarbeitenden Objekts, der umfasst:
- einen Schritt zur Bestimmung wenigstens einer Position einer bedruckten Markierung, bei dem eine für eine Datenbank bestimmte Anfrage ausgegeben wird, wobei die genannte Anfrage Positionen charakteristischer Punkte und / oder Linien des Objekts umfasst, wobei die genannten charakteristischen Punkte und / oder Linien aus dem ersten Bild extrahiert sind und als Rückantwort von der Datenbank eine Information in Form des Objekts und der Position jeder bedruckten Markierung in der genannten Form des Objekts erhalten wird ,
- Schritt zur Erfassung eines Bildes wenigstens einer genannten Markierung und
- einen Schritt zum Lesen einer Information, die von der genannten Markierung dargestellt ist und die Position des zu bearbeitenden Bereichs darstellt,
- einen Schritt (255, 330, 430) zur Erfassung eines zweiten Bildes des genannten Bereichs des zu bearbeitenden Objekts mit einer zweiten Auflösung, die höher ist als die genannte erste Auflösung, und
- einen Schritt (260, 335, 440) zur Bestimmung des genannten physikalischen Merkmals in Abhängigkeit von dem genannten zweiten Bild.

2. Verfahren gemäß Anspruch 1, **dadurch gekennzeichnet, dass** im Verlauf des Schritts (245, 320, 415, 420) zur Bestimmung der Position des Bereichs des zu bearbeitenden Objekts die Position wenigstens eines charakteristischen Punktes des Objekts, dann die Position des in Abhängigkeit von jedem so genannten charakteristischen Punkt des Objekts zu bearbeitenden Bereichs bestimmt wird.

3. Verfahren gemäß irgendeinem der Ansprüche 1 oder 2, **dadurch gekennzeichnet, dass** im Verlauf des Schritts (245, 320, 415, 420) zur Bestimmung der Position des Bereichs des zu bearbeitenden Objekts die Position wenigstens einer charakteristischen Linie des Objekts und dann der Position des zu bearbeitenden Bereichs im Verhältnis zu jeder so genannten charakteristischen Linie des Objekts bestimmt wird.

4. Verfahren gemäß irgendeinem der Ansprüche 1 bis 3, **dadurch gekennzeichnet, dass** es einen Schritt (310) zum Detektieren des Eingangs des genannten Objekts umfasst.

5. Verfahren gemäß irgendeinem der Ansprüche 1 bis 4, **dadurch gekennzeichnet, dass** es einen Schritt zum Markieren des Objekts mit einer Markierung umfasst (280), die wenigstens einen Teil des genannten physikalischen Merkmals darstellt.

6. Verfahren gemäß irgendeinem der Ansprüche 1 bis 5, **dadurch gekennzeichnet, dass** im Verlauf des Schritts (260, 335, 440) zur Bestimmung eines physikalischen Merkmals das genannte physikalische Merkmal mit einer lokalen Struktur der Oberfläche des Objekts im Bereich des zu bearbeitenden Objekts verbunden ist.

7. Verfahren gemäß Anspruch 1, **dadurch gekennzeichnet, dass** es einen Schritt (250, 325, 445) zum Übertragen des physikalischen Merkmals auf eine Datenbank umfasst.

8. Verfahren gemäß Anspruch 7, **dadurch gekennzeichnet, dass** es einen Schritt (355, 450) zum Vergleichen des genannten physikalischen Merkmals mit physikalischen Merkmalen, die in der genannten Datenbank gespeichert sind, und zur Bestimmung des zuvor gespeicherten physikalischen Merkmals umfasst, das dem neuen, auf die Datenbank übertragenen physikalischen Merkmal am ähnlichsten ist.

9. Verfahren gemäß irgendeinem der Ansprüche 1 bis 8, **dadurch gekennzeichnet, dass** im Verlauf des Schritts (245, 320, 415, 420) zur Bestimmung der Position des Bereichs des zu bearbeitenden Objekts, eine Position bestimmt wird, die im Innern des Objekts angeordnet ist, sobald es hergestellt ist.

10. Verfahren gemäß irgendeinem der Ansprüche 1 bis 9, **dadurch gekennzeichnet, dass** im Verlauf des Schritts (315) zur Erfassung eines ersten Bildes des Objekts die Durchgangsgeschwindigkeit des Objekts umgesetzt wird und im Verlauf des Schritts zur Bestimmung der Position des zu bearbeitenden Objekts ein Erfassungsaugenblick des zweiten Bildes bestimmt wird.

11. Verfahren gemäß irgendeinem der Ansprüche 1 bis 10, **dadurch gekennzeichnet, dass** im Verlauf des Schritts (440) zur Bestimmung eines physikalischen Merkmals eine vorherige Drehung (435) des zweiten Bildes durchgeführt wird.

12. Verfahren gemäß irgendeinem der Ansprüche 1 bis 11, **dadurch gekennzeichnet, dass** im Verlauf des Schritts (260, 335) zur Bestimmung des physikalischen Merkmals eine Hashfunktion (365, 340) auf das physikalische Merkmal angewendet wird, und dem physikalischen Merkmal das aus dieser Hashfunktion resultierende Kondensat zugeordnet wird.

13. Verfahren gemäß irgendeinem der Ansprüche 1 bis 12, **dadurch gekennzeichnet, dass** im Verlauf des Schritts (260, 335, 440) zur Bestimmung eines physikalischen Merkmals ein physikalisches Merkmal des Objekts bestimmt wird.

14. Lesevorrichtung eines physikalischen Merkmals auf einem Objekt, **dadurch gekennzeichnet, dass** sie umfasst:
- ein Mittel zur Erfassung eines ersten Bildes wenigstens eines Teils des genannten Objekts, mit einer ersten Auflösung,
- ein Mittel zur Bestimmung der Position eines Bereichs des in Abhängigkeit von dem ersten Bild zu bearbeitenden Objekts, das umfasst:
- ein Mittel zur Bestimmung wenigstens einer Position einer bedruckten Markierung, die ein Mittel zur Ausgabe einer für eine Datenbank bestimmten Anfrage umfasst, wobei die genannte Anfrage Positionen von charakteristischen Punkten und / oder Linien des Objekts, wobei die genannten charakteristischen Punkte und / oder Linien aus dem ersten Bild extrahiert sind, und ein Mittel zum Empfangen einer Information über die Form des Objekts als Antwort aus der Datenbank und der Position jeder bedruckten Markierung in der genannten Form des Objekts umfasst:
- ein Mittel zur Erfassung eines Bildes wenigstens einer so genannten Markierung und,
- ein Mittel zum Lesen einer Information, die von dem genannten Bild dargestellt wird und die Position des zu bearbeitenden Bereichs darstellt,
- ein Mittel zum Erfassen eines zweiten Bildes des Bereichs des zu bearbeitenden Bereichs mit einer zweiten Auflösung, die größer ist als die erste Auflösung und
- ein Mittel zur Bestimmung des genannten physikalischen Merkmals in Abhängigkeit von dem genannten zweiten Bild.

## Claims

1. A method for reading a physical characteristic on an object, **characterized in that** it comprises:
- a step (240, 315, 405) of capturing a first image of at least one portion of said object, with a first resolution;
- a step (245, 320, 415, 420) of determining the position of an area of the object to be processed, as a function of said first image, which comprises:
- a step of determining at least one position of a printed mark, wherein a request is sent to a database, said request comprising positions of characteristic points and/or lines of the object, said characteristic points and/or lines being extracted from the first image, and an item of information is received in return from the database, with the shape of the object and the position of each printed mark in said shape of the object;
- a step of capturing an image of at least one said mark; and
- a step of reading an item of information represented by said mark and representative of the position of the area to be processed;
- a step (255, 330, 430) of capturing a second image of said object area to be processed, with a second resolution, higher than said first resolution; and
- a step (260, 335, 440) of determining said physical characteristic as a function of said second image.

2. Method according to claim 1, **characterized in that**, during the step (245, 320, 415, 420) of determining the position of the area of the object to be processed, the position of at least one characteristic point of the object and then the position of the area to be processed, relative to each said characteristic point of the object, are determined.

3. Method according to any one of claims 1 or 2, **characterized in that**, during the step (245, 320, 415, 420) of determining the position of the area of the object to be processed, the position of at least one characteristic line of the object and then the position of the area to be processed, relative to each said characteristic line of the object, are determined.

4. Method according to any one of claims 1 to 3, **characterized in that** it comprises a step (310) of detecting the arrival of said object.

5. Method according to any one of claims 1 to 4, **characterized in that** it comprises a step (280) of marking the object with a marking bearing an item of information representative of at least one portion of said physical characteristic.

6. Method according to any one of claims 1 to 5, **characterized in that**, during the step (260, 335, 440) of determining a physical characteristic, said physical characteristic is linked to a local structure of the surface of the object in the area of the object to be processed.

7. Method according to claim 1, **characterized in that** it comprises a step (250, 325, 445) of sending the physical characteristic to a database.

8. Method according to claim 7, **characterized in that** it comprises a step (355, 450) of comparing said physical characteristic with physical characteristics stored in said database, and of determining the previously-stored physical characteristic that is the most similar to the new physical characteristic sent to the database.

9. Method according to any one of claims 1 to 8, **characterized in that**, during the step (245, 320, 415, 420) of determining the position of the object area to be processed, a position is determined that is inside the object once manufactured.

10. Method according to any one of claims 1 to 9, **characterized in that**, during the step (315) of capturing a first image of the object, the speed of the object's passage is utilized and, during the step of determining the position of the area to be processed, an instant for capturing the second image is determined.

11. Method according to any one of claims 1 to 10, **characterized in that**, during the step (440) of determining a physical characteristic, a prior rotation (435) of the second image is performed.

12. Method according to any one of claims 1 to 11, **characterized in that**, during the step (260, 335) of determining the physical characteristic, a hash function (365, 340) is applied to the physical characteristic, and the hash resulting from this hash function is associated to the physical characteristic.

13. Method according to any one of claims 1 to 12, **characterized in that**, during the step (260, 335, 440) of determining a physical characteristic, a physical characteristic of the object is determined.

14. Device for reading a physical characteristic on an object, **characterized in that** it comprises:
- a means for capturing a first image of at least one portion of said object, with a first resolution;
- a means for determining the position of an area of the object to be processed as a function of said first image, which comprises:
- a means for determining at least one position of a printed mark, which comprises a means for sending a request to a database, said request comprising positions of characteristic points and/or lines of the object, said characteristic points and/or lines being extracted from the first image, and a means for receiving in return from the database, an item of information with the shape of the object and the position of each printed mark in said shape of the object;
- a means for capturing an image of at least one said mark; and
- a means for reading an item of information represented by said mark and representative of the position of the area to be processed;
- a means for capturing a second image of said object area to be processed, with a second resolution, higher than said first resolution; and
- a means for determining said physical characteristic as a function of said second image.
